(19) Europäisches Patentamt
European Patent Office
Office européen des brevets

(11) **EP 4 692 729 A1**

(12) **EUROPEAN PATENT APPLICATION**

(43) Date of publication:
**11.02.2026 Bulletin 2026/07**

(21) Application number: **24203518.6**

(22) Date of filing: **30.09.2024**

(51) International Patent Classification (IPC):
***G01C 19/5691*** *(2012.01)*

(52) Cooperative Patent Classification (CPC):
**G01C 19/5691**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.08.2024 IL 31485424**

(71) Applicant: **Israel Aerospace Industries Ltd.**
**7010000 Lod (IL)**

(72) Inventors:
• **GRUVER, José Luis**
**6082156 Shoham (IL)**
• **ARAZI, Rosh Haayin**
**4813949 Rosh Haayin (IL)**

(74) Representative: **Arnold & Siedsma**
**Bezuidenhoutseweg 57**
**2594 AC The Hague (NL)**

(54) **OPERATIONAL MODE FOR AXISYMMETRIC CORIOLIS VIBRATING GYROSCOPES**

(57) A patch antenna includes: an upper patch radiator, a lower patch radiator beneath the upper patch radiator, an upper feed layer beneath the lower patch radiator, a ground plane beneath the upper feed and a lower feed layer beneath the ground plane. The upper feed layer couples a first feed line to the upper patch radiator. The ground plane has slot apertures in orthogonal directions, to obtain orthogonal polarizations. The lower feed layer couples a second feed line to the lower patch radiator. The upper feed layer is coupled to the lower patch radiator via the ground plane slot aperture in one direction, and the lower feed layer is coupled to the lower patch radiator via the ground plane slot aperture in an orthogonal direction.

FIG. 1A

EP 4 692 729 A1

**Description**

**TECHNICAL FIELD**

The present disclosure, in some embodiments, thereof, relates to an axisymmetric Coriolis vibrating gyroscope and, more particularly, but not exclusively, to a mode of operation of an axisymmetric Coriolis vibrating gyroscope.

BACKGROUND

An axisymmetric Coriolis vibrating gyroscope (CVG) is a sensor used to measure angular velocity based on the Coriolis effect. Axisymmetric CVGs, like the macro and micro Hemispherical Resonator Gyroscope (HRG), are currently operated in the Force To Rebalance (FTR) and/or Whole Angle (WA) modes. In FTR mode, the vibrating wave is maintained at a specific angular direction and the force applied to hold the wave is proportional to the input angular rate, where the proportional constant is the FTR scale factor. In WA mode, for angular velocities greater than the lock-in rate, the wave rotates at an angular rate that is proportional to the input angular rate, where the proportional constant is the geometric scale factor. For angular rates smaller than the lock-in rate, the wave will precess until it locks at a determined angular position. The FTR mode is capable of overcoming this limitation, but its dynamic range is usually restricted by the rebalance force.

**SUMMARY OF THE INVENTION**

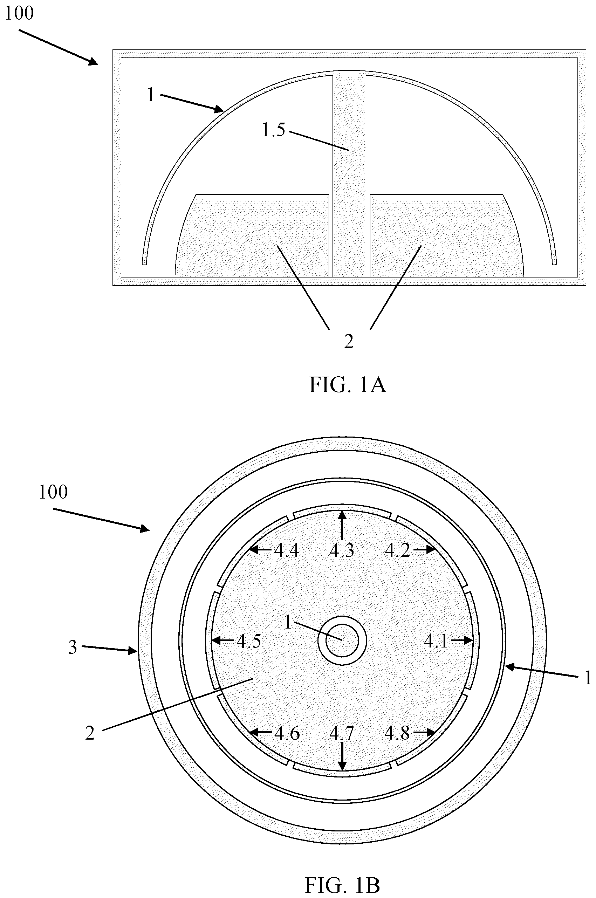

According to some embodiments there is provided an apparatus, a system and a method of operation of Coriolis vibrating gyroscope.
A CVG according to aspects of the disclosure includes a resonator which is driven into oscillation at its natural frequency. When the gyroscope experiences angular rotation, the Coriolis effect induces secondary vibrations orthogonal to the original oscillation plane.
The CVG also includes at least two control elements which are coupled to the resonator. The control elements are used for two functions, forcing and pickoff. Forcing provides a driving force which controls the direction and amplitude of the resonator vibration. Forcing may be used for functions such as maintaining the resonator's resonant frequency, bias and quadrature correction, preventing amplitude decay and controlling precession of the vibration. The control elements may also be used for self-calibration of bias and/or scale factor when needed. Pickoff senses the motion or vibration of the resonator. Pickoff readings from two or more control elements may be used to determine the direction of resonator vibration.
The physical mechanism that couples the control elements and the resonator depends on factors such as their type, the materials they are formed from, and so forth. In one example the coupling between the resonator and the control elements is capacitive. In another example the coupling between the resonator and the control elements is piezoelectric.
Embodiments of the disclosure present a CVG device and method of operating a CVG, utilizing an operating mode denoted herein the Force Angle Tracking (FAT). In FAT mode, a forcing control loop applies force to the CVG in order to maintain the direction of vibration at the setpoint direction. The setpoint value for the current sampling interval is established based on the precession of the vibration during previous sampling interval(s). Thus in FAT mode, the forcing control loop uses a non-constant setpoint value, unlike FTR mode where the setpoint value does not vary.
The FAT mode enables operating axisymmetric CVGs without the need to switch between the FTR and WA modes and with continuous output. The FAT mode prevents the lock-in effect of the WA mode and overcomes the force limitation of the FTR mode, thus permitting a robust gyroscope output without dead zones (i.e. continuous output) and without dynamic range limitations. FAT may be easily implemented in current CVGs without changes to the CVG hardware.
For ease of explanation, in some figures according to the disclosure the sizes of some or all of the components of the CVG (e.g. HRG) may be out of proportion and/or exaggerated in size.
Referring now to the drawings, Figs. 1A-1B are simplified side and top sectional views respectively of an exemplary Hemispherical Resonator Gyroscope, according to some examples of the presently disclosed subject matter. Resonator 1 in Figs. 1A-1B is shown without vibration.
Fig. 1A shows a side view of HRG 100. HRG 100 includes resonator 1 (optionally made of fused silica), and base 2 (optionally made of coated fused silica) which includes electrodes 4.1-4.8 and case 3. Resonator 1 has a stem 1.5 that goes through base 2.
In the exemplary embodiment illustrated in Fig. 1B, base 2 has eight electrodes 4.1-4.8 operating as control elements. Together with resonator 1, electrodes 4.1-4.8 form capacitors which are used to establish a standing wave in resonator 1 and to control it. In the current example, the same capacitors are also used for pick-off (e.g. detection of the position of the standing wave with respect to the gyroscope case).
Other embodiments may include a different number of control elements.

In alternate examples, the control elements are divided into electrodes that are used only for controlling the resonator vibration (i.e. forcing) and other electrodes that are used only for sensing the resonator movement (i.e. pickoff). In additional examples, some electrodes are used only for forcing, some are used only for pickoff and at least one electrode is used for both forcing and pickoff.

Fig. 1B is a top view of HRG 100, showing resonator 1, base 2, case 3 and electrodes 4.1-4.8 in base 2. In order to establish a standing wave in the resonator, appropriate forces are applied to resonator 1 using electrodes 4.1-4.8.

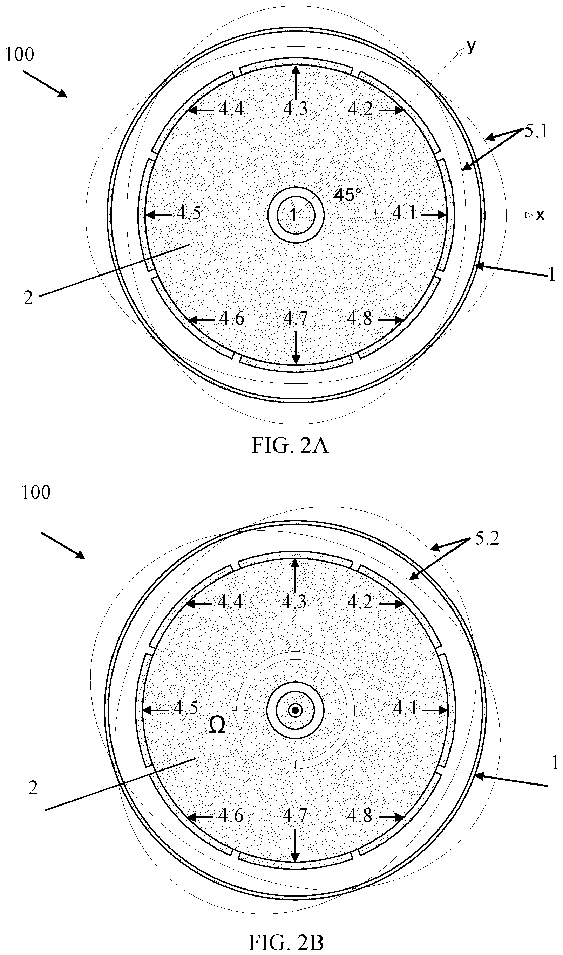

Reference is now made to Figs. 2A-2B which are simplified views illustrating vibration patterns of an HRG, according to some examples of the presently disclosed subject matter.

Fig. 2A depicts a vibration pattern of resonator 1 when no external angular velocity is applied. Fig. 2A shows the second mode of resonator 1 of a standing wave 5.1. This vibration pattern is characterized by two different position patterns: the first is the position where the standing wave has a maximum amplitude (located at 0, 90, 180 and 270 degrees) and where the standing wave has a minimum amplitude (nodes) (located at 45, 135, 225 and 315 degrees).

Note that the nodes and antinodes are orthogonal in the sense of 45 degrees as shown in Fig. 2A. This defines the x and y axes, and also the *x(t)* and *y(t)* gyroscope output signals.

Fig. 2B depicts a vibration pattern 5.2 of resonator 1 when an external angular velocity is applied to HRG 100. Vibration pattern 5.2 responds to the inertial rotation of the resonator 1 by precessing about its z axis (which is 90° orthogonal to the x and y axes) with an angular velocity, where:

$$\eta = \frac{\Omega_{output}}{\Omega_{input}}$$

is the geometric scale factor (also denoted Bryan's scale factor). Note that when HRG 100 rotates counterclockwise the vibration pattern precesses clockwise. The nodes and antinodes precess, therefore by measuring their position it is possible to know the angular position of the vibration pattern and using the gyroscope scale factor to know how the gyroscope rotated with respect to inertial space.

According to a first aspect of some embodiments of the present disclosure there is provided axisymmetric Coriolis vibrating gyroscope, comprising:

a resonator configured to vibrate in a standing wave;
a plurality of control elements, configured to perform at least one of maintaining vibration in the resonator by applying respective forces to the resonator and sensing vibrations of the resonator around an axis of symmetry of the resonator; and
a control circuitry associated with the plurality of control elements, configured to iteratively:

a) control the control elements so as to maintain an angular direction of the vibration at a current setpoint;
b) at a sampling time of a current iteration, determine an angular direction of the vibration of the resonator from respective readings of at least two of the control elements;
c) calculate a total angular rate as a sum of a first angular rate determined from a force applied to the resonator by at least two of the control elements and a second angular rate determined from the angular direction of the vibration at the sampling time of the current iteration; and
d) update the setpoint to an angular direction of the vibration determined in a previous iteration.

According to some embodiments of the first aspect of the present disclosure, the force is calculated based on the updated setpoint established in the immediately preceding iteration.

According to some embodiments of the first aspect of the present disclosure, the previous iteration is the immediately preceding iteration. In some alternate aspects of the disclosure, the previous iteration is any iteration other than the immediately preceding iteration.

According to some embodiments of the first aspect of the present disclosure, the first angular rate comprises a ratio of the force applied to the resonator and a force to rebalance mode scale factor.

According to some embodiments of the first aspect of the present disclosure, the second angular rate is determined from the angular direction of the vibration at the sampling time of the current iteration and an angular direction of the vibration determined in at least one previous iteration.

According to some embodiments of the first aspect of the present disclosure, the second angular rate is determined from a difference between the angular direction of the vibration at the sampling time of the current iteration and an angular direction of the vibration determined in at least one previous iteration.

According to some embodiments of the first aspect of the present disclosure, the first angular rate comprises:

$$\frac{f^{FTR}(t_i)}{SF_{FTR}}$$

and the second angular rate comprises:

$$-\frac{\theta_{t_i} - \theta_{t_{i-1}}}{\eta \Delta t},$$

wherein:

$f^{FTR}(t_i)$ is the force applied to the resonator by the at least two control elements,
$SF_{FTR}$ is a force to rebalance mode scale factor,
$\theta_{ti}$ is an angular direction of the vibration of the resonator at sampling time i,
$\theta_{ti-1}$ is an angular direction of the vibration of the resonator at sampling time *i-1,*
$\eta$ is a whole angle mode scale factor, and
$\Delta t$ is the sampling period.

According to some embodiments of the first aspect of the present disclosure, the control circuitry includes a feedback loop configured to adjust the amplitude of the forces applied by the forcing element to maintain a constant vibration amplitude of the resonator.

According to some embodiments of the first aspect of the present disclosure, the control circuitry further comprises a phase-locked loop (PLL) configured to synchronize the frequency of the resonator's vibration with a reference signal.

According to some embodiments of the first aspect of the present disclosure, the control circuitry further comprises a quadrature control loop configured to reduce quadrature error.

According to second aspect of some embodiments of the present disclosure there is provided a method for operating an axisymmetric Coriolis vibrating gyroscope, the method comprising iteratively:

a. controlling a force applied to a resonator so as to maintain an angular direction of a vibration of the resonator at a current setpoint;
b. at a sampling time, determining an angular direction of the vibration of the resonator;
c. calculating a total angular rate as a sum of a first angular rate determined from the force applied to the resonator and a second angular rate determined from the angular direction of the vibration at the sampling time of the current iteration; and
d. updating the setpoint to an angular direction of the vibration determined in a previous iteration.

According to some embodiments of the second aspect of the present disclosure, the force is calculated based on the updated setpoint established in the immediately preceding iteration.

According to some embodiments of the second aspect of the present disclosure, the previous iteration is the immediately preceding iteration. According to some alternate embodiments of the second aspect of the present disclosure, the previous iteration is any iteration other than the immediately preceding iteration.

According to some embodiments of the second aspect of the present disclosure, the first angular rate comprises a ratio of the force applied to the resonator and a force to rebalance mode scale factor.

According to some embodiments of the second aspect of the present disclosure, the second angular rate is determined from the angular direction of the vibration at the sampling time of the current iteration and an angular direction of the vibration determined in at least one previous iteration.

According to some embodiments of the second aspect of the present disclosure, the second angular rate is determined from a difference between the angular direction of the vibration at the sampling time of the current iteration and an angular direction of the vibration determined in at least one previous iteration.

According to some embodiments of the second aspect of the present disclosure, the first angular rate comprises:

$$\frac{f^{FTR}(t_i)}{SF_{FTR}}$$

and the second angular rate comprises:

$$-\frac{\theta_{t_i} - \theta_{t_{i-1}}}{\eta \Delta t},$$

and wherein:

$f^{FTR}(t_i)$ is the force applied to the resonator,
$SF_{FTR}$ is a force to rebalance mode scale factor,
$\theta_{ti}$ is an angular direction of the vibration of the resonator at sampling time i,
$\theta_{ti-1}$ is an angular direction of the vibration of the resonator at sampling time *i-1*,
$\eta$ is a whole angle mode scale factor, and
$\Delta t$ is the sampling period.

According to some embodiments of the second aspect of the present disclosure, the method further comprises adjusting the amplitude of forces applied to the resonator so as to maintain a constant vibration amplitude of the resonator.

According to some embodiments of the second aspect of the present disclosure, the method further comprises synchronizing the frequency of the resonator's vibration with a reference signal.

According to some embodiments of the second aspect of the present disclosure, the method further comprises reducing quadrature errors using a quadrature control loop.

According to some embodiments of the second aspect of the present disclosure, the method further comprises inducing the vibration in the resonator of the axisymmetric Coriolis vibrating gyroscope.

Unless otherwise defined, all technical and/or scientific terms used within this document have meaning as commonly understood by one of ordinary skill in the art/s to which the present disclosure pertains. Methods and/or materials similar or equivalent to those described herein can be used in the practice and/or testing of embodiments of the present disclosure, and exemplary methods and/or materials are described below. Regarding exemplary embodiments described below, the materials, methods, and examples are illustrative and are not intended to be necessarily limiting.

Some embodiments of the present disclosure may be embodied as a system, method, or computer program product. For example, some embodiments of the present disclosure may take the form of an entirely hardware embodiment or an embodiment combining software and hardware aspects that may all generally be referred to herein as a "circuit," "circuitry," "module" and/or "system."

Implementation of the method and/or system of some embodiments of the present disclosure may involve performing and/or completing selected tasks manually, automatically, or a combination thereof. According to actual instrumentation and/or equipment of some embodiments of the method and/or system of the present disclosure, several selected tasks could be implemented by hardware, by software or by firmware and/or by a combination thereof, e.g., using an operating system.

For example, hardware for performing selected tasks according to some embodiments of the present disclosure could be implemented as a resonator coupled to control elements and/or a circuit. As software, selected tasks according to some embodiments of the present disclosure could be implemented as a plurality of software instructions being executed by a computational device e.g., using any suitable operating system.

In some embodiments, one or more tasks according to some exemplary embodiments of method and/or system as described herein are performed by a data processor, such as a computing platform for executing a plurality of instructions. Optionally, the data processor includes a volatile memory for storing instructions and/or data and/or a non-volatile storage e.g., for storing instructions and/or data. Optionally, a network connection is provided as well. User interface/s e.g., display/s and/or user input device/s are optionally provided.

Some embodiments of the present disclosure may be described below with reference to flowchart illustrations and/or block diagrams. For example illustrating exemplary methods and/or apparatus (systems) and/or and computer program products according to embodiments of the present disclosure.

The flowchart and block diagrams in the Figures illustrate the architecture, functionality, and operation of possible implementations of systems, methods, and computer program products according to various embodiments of the disclosed subject matter. In this regard, each block in the flowchart or block diagrams may represent a module, segment, or portion of instructions which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## BRIEF DESCRIPTION OF THE DRAWINGS

In order to understand the invention, embodiments will now be described, by way of non-limiting example only, with reference to the accompanying drawings. Features shown in the drawings are meant to be illustrative of only some embodiments of the present disclosure, unless otherwise indicated. In the drawings like reference numerals are used to indicate corresponding parts.

In block diagrams and flowcharts, optional elements/components and optional stages may be included within dashed boxes.

In the figures:

Figs. 1A-1B are simplified side and top sectional views respectively of an exemplary Hemispherical Resonator Gyroscope, according to some examples of the presently disclosed subject matter;

Figs. 2A-2B are simplified views illustrating vibration patterns of an HRG, according to some examples of the presently disclosed subject matter;

Fig. 3 is a simplified block diagram showing basic components of an axisymmetric Coriolis vibrating gyroscope, according to some embodiments of the disclosure;

Fig. 4 is a simplified flowchart of a method for operating an axisymmetric CVG, according to aspects of the disclosure;

Fig. 5 is a simplified diagram illustrating the calculation flow and feedback loops for an HRG, according to an exemplary aspect of the disclosure;

Figs. 6A-6B show experimental results of the dynamics of the output angular position of the vibrating wave for changes of the input angular rate from 0 to 1.5, 3.5 and 5.0 deg/sec respectively, according to exemplary aspects of the disclosure;

Fig. 7 shows experimental results illustrating of the time evolution of the FAT output angular rate $\Omega(t)$ to a change of an angular rate smaller than $\Omega_{FTR}^{Max}$, according to exemplary aspects of the disclosure;

Fig. 8 shows experimental results illustrating the dynamics of the FAT output angular velocity $\Omega(t)$ to a change of $\Omega_i$ from 0 to 3.5 deg/sec, according to exemplary aspects of the disclosure;

Fig. 9A shows experimental results illustrating the dynamics of the WA, FTR and FAT modes to a change of the input angular rate $\Omega_i$ from 3.5 to 0 deg/sec, respectively, according to exemplary aspects of the disclosure;

Fig. 9B shows the time evolution of the output angle for the experimental results shown in Fig. 9A, according to exemplary aspects of the disclosure; and

Fig. 10 shows experimental results illustrating the dynamical response of the WA, FTR and FAT modes to a step change of the input angular rate $\Omega_i$ from 3.5 to 2.5 deg/sec, respectively, according to exemplary aspects of the disclosure.

The various embodiments of the present disclosure are described below with reference to the drawings, which are to be considered in all aspects as illustrative only and not restrictive in any manner.

Elements illustrated in the drawings are not necessarily to scale, emphasis instead being placed upon clearly illustrating the principles of embodiments of the present disclosure. Moreover, two different objects in the same figure may be drawn to different scales.

## DETAILED DESCRIPTION OF EMBODIMENTS

The present disclosure, in some embodiments, thereof, relates to an axisymmetric Coriolis vibrating gyroscope and, more particularly, but not exclusively, to a mode of operation of an axisymmetric Coriolis vibrating gyroscope.

The principles, uses and implementations of the teachings herein may be better understood with reference to the accompanying description and figures. Upon perusal of the description and figures present herein, one skilled in the art will be able to implement the teachings herein without undue effort or experimentation.

Before explaining at least one embodiment in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

I. FAT-mode axisymmetric Coriolis vibrating gyroscope

FAT mode for an axisymmetric Coriolis vibrating gyroscope combines a pseudo-WA mode and a pseudo-FTR mode into a single operational mode which provides unlimited dynamic range and which overcomes the lock-in or dead zone of the standard WA mode. The forcing control loop is used to maintain the angle of vibration at a setpoint whose value is not constant, and which may change between sampling intervals in accordance with the external angular rate. The setpoint for each sampling interval is calculated from the angular direction detected at one or more previous sampling times. This is in contrast with the standard FTR control loop which closes the control loop to a fixed setpoint angle.

The force applied by the forcing control loop is used to calculate a first angular rate (also denoted herein the pseudo-FTR angular rate), similarly to how it is calculated in standard FTR mode. However unlike standard FTR mode which calculates the angular rate using the same setpoint for all sampling intervals, the pseudo-FTR angular rate calculation uses a setpoint whose value may be different for different sampling intervals.

When the forcing control loop is unable to maintain the angular direction of the vibration at the setpoint for the current sampling interval the vibration will precess. This precession is used to calculate a second angular rate (also denoted herein the pseudo-WA angular rate), similarly to how it is calculated in standard WA mode.

In FAT the output angular rate for the sampling interval is calculated as the sum of the first angular rate and the second angular rate.

As used herein, according to some aspects of the disclosure, the terms "pickoff" and "pickoff mode" mean sensing the motion of the resonator precessing wave so that the resonator's precessing wave angular direction of vibration may be determined.

As used herein, according to some aspects of the disclosure, the term "forcing" and "forcing mode" means maintaining the vibratory motion of the resonator. Optionally, forcing also includes applying suitable forces to the resonator in order to induce resonator vibration and/or maintain amplitude of the resonator vibration and/or to minimize errors caused by mechanical, electronic and/or algorithm defects.

As used herein, according to some aspects of the disclosure, the term "control element" means a hardware element that converts one form of energy to another. In aspects of this disclosure a control element may serve for forcing and/or pickoff.

As used herein, according to some aspects of the disclosure, the term "forcing control loop" means a control loop that determines how much force should be applied to the resonator by the control elements in order to maintain the angular direction of vibration at the current setpoint. According to some aspects of the disclosure, the forcing control loop may perform additional function(s) including but not limited to keeping the quadrature equal to zero and/or self calibration operations.

As used herein, according to some aspects of the disclosure, the term "setpoint" means the angular direction of vibration that the forcing control loop attempts to maintain in the resonator.

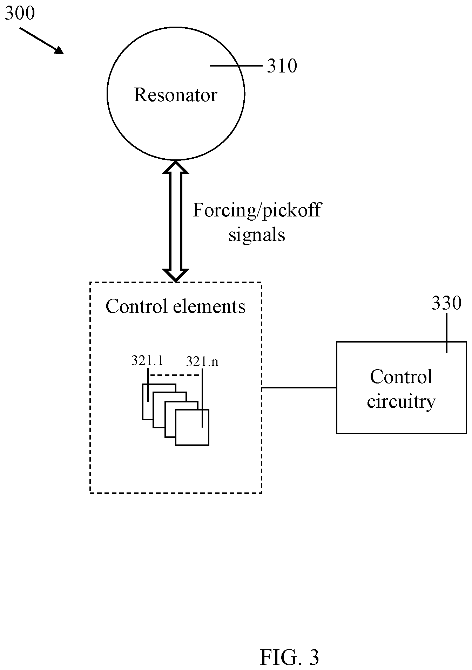

Reference is now made to Fig. 3, which is a simplified block diagram illustrating basic components of an axisymmetric Coriolis vibrating gyroscope, according to some embodiments of the disclosure. Fig. 3 is presented for illustrative purposes and is not limiting as to the type, shape, size and so forth of the components of the CVG described herein.

CVG 300 includes resonator 310, two or more control elements 321.1-321.n and control circuitry 330.

## II. Resonator

Resonator 310 is configured to vibrate in a standing wave. The resonator may be any resonator suitable for use in an axisymmetric CVG. There are many types of resonators having an axisymmetric structure that are known in the art, and others may be developed in the future. Following is a non-limiting list of examples resonator types.

In one example, the resonator is a hemisphere resonator.

In a second example, the resonator is a wineglass resonator.

In a third example, the resonator is a disk resonator.

In a fourth example, the resonator is a shell resonator.

In a fifth example, the resonator is cylindrical resonator.

In a sixth example, the resonator is honeycomb resonator.

Control element

According to some aspects of the invention, at least one control element is physically distanced from resonator 310 (e.g. on a base supporting resonator 310). When the control element is not physically coupled to resonator 310, applying a signal to the control element causes it to interact with resonator 310 or with an element physically attached to the resonator, in a way that controls the resonator vibrations. For example, the control unit may be an electrode in the base, where applying a voltage to the electrode creates a capacitance with the coating on resonator 310.

Alternately or additionally, at least one control element is physically coupled to resonator 310 (e.g. glued to the resonator). For example, the control element may be a piezoelectric element which is glued to resonator 310 and is connected to a voltage source. When a voltage is applied to the piezoelectric element, the piezoelectric element vibrates causing a vibration in resonator 310.

CVG 300 includes multiple control elements 321.1-321.n, where n is at least two. At least two of the control elements are capable of operating in forcing mode and at least two of the control elements are capable of operating in pickoff mode.

For descriptive purposes, Fig. 3 schematically shows control elements 321.1-321.n as aligned with each other. However, the control elements are typically physically distanced from each other and arranged around the resonator.

A control element operating in forcing mode maintains vibration in resonator 310 by applying respective forces to the resonator. The force applied by the control element is controlled by signals (e.g. voltages) provided by control circuitry 330.

According to optional aspects of the disclosure, the forces applied by the control elements to the resonator may be adapted to perform additional functions, such as quadrature correction and/or calibration or self-calibration.

A control element operating in pickoff mode senses vibrations of resonator 310 around an axis of symmetry of the resonator. These signals are output to control circuitry 330, which processes them in order to determine the angular velocity of CVG 300 and to produce control signals for control elements 321.1-321.n.

Control elements may operate:

  a) Only in pickoff mode;
  b) Only in forcing mode; or
  c) May alternate between forcing mode and pickoff mode.

A control element may be any type of element known in the art which is suitable for forcing and/or pickoff in an axisymmetric CVG.

In one example, at least one of the control elements is a piezoelectric element.

In a second example, at least one of the control elements is an electromagnetic element.

In a third example, at least one of the control elements is a capacitive element.

In a fourth example, at least one of the control elements is an optical element.

In a fifth example, at least one of the control elements is a piezoresistive element.

In a sixth example, the control elements are of multiple types, such as any combination of the above examples.

III. Control circuitry

According to embodiments of the disclosure, control circuitry 330 inputs signals from control elements which are operating in pickoff mode and provides control signals to control elements which are operating in forcing mode. Control circuitry 330 operates the CVG in FAT mode by performing analog and/or digital processing operations.

The following describes the operations performed by control circuitry 330 during a sampling interval, where each sampling interval may be considered a single iteration.

Control circuitry 330 establishes a respective current setpoint for each sampling interval. During the sampling interval, control circuitry 330 controls the control elements operating as forcing elements so as to maintain the angular direction of the vibration at the current setpoint, provided that the force supplied by the forcing elements is sufficient. As noted above, when control elements 321.1-321.n are unable to supply enough force to maintain the angular direction of vibration at the setpoint, the angular direction of vibration will precess.

At the sampling time of the given sampling interval, control circuitry 330 determines the angular direction of the vibration of resonator 310 from respective readings of at least two of control elements 321.1-321.n.

Control circuitry 330 calculates a total angular rate as the sum of two angular rates, the pseudo-FTR angular rate and the pseudo-WA angular rate.

The pseudo-FTR angular rate is determined from the forces applied to the resonator by at least two of the control elements. The magnitudes of these forces are known from the operation of the forcing control loop. In one example, the pseudo-FTR angular rate is the ratio of the force applied to the resonator and a force to rebalance mode scale factor.

The pseudo-WA angular rate is calculated from the angular direction of the vibration at the sampling time.

In one example, the pseudo-WA angular rate is determined from the angular direction of the vibration determined for the current sampling interval and the angular direction of the vibration determined in at least one previous sampling interval. In a further example, the pseudo-WA angular rate is determined from the difference between the angular direction of the vibration determined for the current sampling interval and the angular direction of the vibration determined in at least one previous sampling interval.

Control circuitry 330 then updates the setpoint to the angular direction of vibration determined in a previous sampling interval.

In some aspects of the disclosure, the setpoint is updated to the angular direction determined in the immediately preceding sampling interval. In some alternate aspects of the disclosure, the setpoint is updated to the angular direction determined in any preceding sampling interval other than the immediately preceding sampling interval.

Optionally, the setpoint is updated for each sampling interval.

In alternate embodiments, the setpoint is not necessarily updated for every sampling interval in a sequence of sampling intervals. In some cases the setpoint may remain constant for two or more sampling intervals. For example, the control elements' pickoff readings for some sampling intervals may be used to calculate bias and it may be desirable to retain the setpoint at a constant level during those times.

As used herein, according to some aspects of the disclosure, the terms "previous sampling interval" and "previous iteration" mean any sampling interval that occurred before the current sampling interval. Thus if the current sampling interval is i, a previous sampling interval is sampling interval i-n where n is greater than or equal to 1.

As used herein, according to some aspects of the disclosure, the term "immediately preceding sampling interval" and "immediately preceding iteration" mean the sampling interval that occurred directly before the current sampling interval. Thus if the current sampling interval is i, the immediately preceding sampling interval is sampling interval i-1.

As used herein, according to some aspects of the disclosure, the terms "any preceding sampling interval other than the immediately preceding sampling interval" and "any preceding iteration other than the immediately preceding iteration" mean any sampling interval that occurred before the immediately preceding sampling interval. Thus if the current sampling interval is i, a preceding sampling interval other than the immediately preceding sampling interval is any sampling interval i-n, where n is greater than or equal to 2.

In an exemplary aspect of the disclosure, presented in more detail below, control circuitry 330 calculates the pseudo-FTR angular rate as:

$$\frac{f^{FTR}(t_i)}{SF_{FTR}}$$

and the pseudo-WA angular rate is calculated as:

$$-\frac{\theta_{t_i} - \theta_{t_{i-1}}}{\eta \Delta t}$$

where:

$f^{FTR}(t_i)$ is the force applied to the resonator by the at least two control elements,
$SF_{FTR}$ is a force to rebalance mode scale factor,
$\theta_{t_i}$ is an angular direction of the vibration of the resonator at sampling time i,
$\theta_{t_{i-1}}$ is an angular direction of the vibration of the resonator at sampling time *i-1,*
$\eta$ is a whole angle mode scale factor, and
$\Delta t$ is the sampling period.

The Force To Rebalance (FTR) scale factor $SF_{FTR}$ is the ratio between the FTR force and the input angular velocity:

$$SF^{FTR} = \frac{f^{FTR}}{\Omega_{input}}.$$

According to some embodiments of the invention, control circuitry 330 includes a demodulator for demodulating signals obtained from the CVG (e.g. signals from control elements operating in pickoff mode).

According to some embodiments of the invention, control circuitry 330 includes at least one analog to digital converter (A/D) for converting analog signals from the CVG to digital signals (possibly after analog processing) and/or to convert signals to be supplied to forcing control elements from digital to analog signals.

According to some embodiments of the invention, control circuitry 330 includes an oscillator (e.g. a voltage controlled oscillator) which provides a reference frequency signal for use in one or more control loops (e.g. phase-locked loop which synchronizes the resonator's vibration frequency).

According to some embodiments of the invention, control circuitry 330 includes at least one processor, configured to perform digital processing operations so as to operate the CVG in FAT mode. Examples of processor types include: Central Processing Units (CPUs), Digital Signal Processors (DSPs) and Application-Specific Integrated Circuits (ASICs).

According to some embodiments of the invention, control circuitry 330 includes non-transitory storage medium storing program instructions which, when executed by the processor(s), cause the at least one processor to operate the CVG in FAT mode.

IV. Feedback loops and additional control circuitry functions

In addition to the forcing control loop described above, control circuitry 330 may also implement one or more additional control loops to ensure proper operation of CVG 300.

In one aspect, control circuitry 330 implements a feedback loop which adjusts the amplitude of the forces applied by the forcing element to maintain a constant vibration amplitude of the resonator.

In one aspect, control circuitry 330 implements a phase-locked loop (PLL) which synchronizes the frequency of the resonator's vibration with a reference signal. The reference signal may be provided by an external device and/or may be generated by an internal part of control circuitry 330, such as a voltage controlled oscillator (VCO).

In one aspect, control circuitry 330 implements a quadrature control loop which reduces quadrature error.

In one aspect, control circuitry 330 implements calibration and/or self-calibration operations so as to ensure that the CVG is properly calibrated.

V. A method for operating an axisymmetric Coriolis vibrating gyroscope in FAT mode

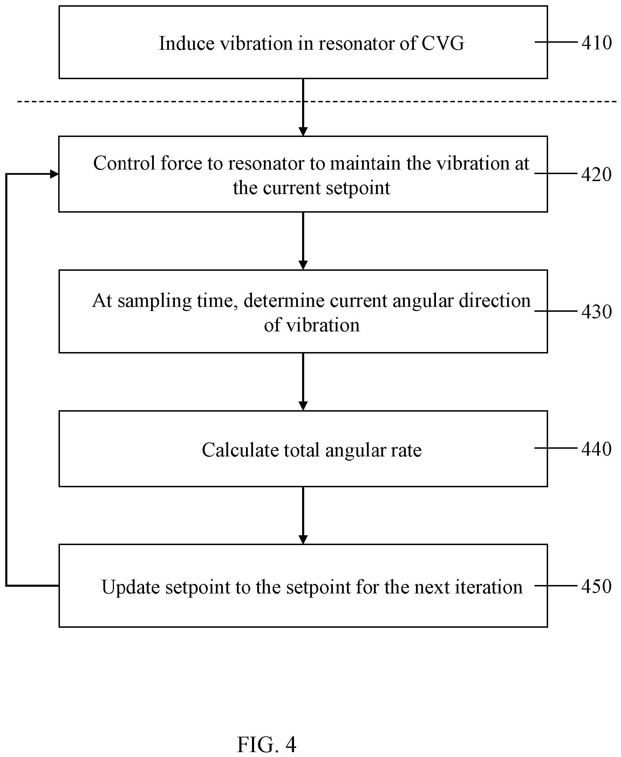

Reference is now made to Fig. 4, which is a simplified flowchart of a method for operating an axisymmetric CVG, according to some aspects of the disclosure.

The method is iterative, where each iteration 420-450 corresponds to a sampling interval.

In 420, a force applied to the resonator is controlled to maintain the angular direction of the vibration at a current setpoint. In some embodiments, the force to be applied to the resonator is calculated based on the updated setpoint value set by the immediately preceding iteration (i.e. in 450 of the preceding iteration).

The control signals to the control elements (e.g. voltages) are generated so that the correct forces are applied by the control elements on the resonator.

According to some aspects of the disclosure, the force also maintains the amplitude of the resonator vibration.

In 430, the angular direction of the vibration of the resonator at the sampling time of the current sampling interval is determined. When the force applied in 420 is sufficient to maintain the angular direction of the vibration, the angular direction of vibration at the sampling time will be equal to the setpoint. In some cases the applied force is not able to compensate for the actual angular rotation of the CVG and the angular direction will have precessed, in which case the angular direction of the vibration at the sampling time will be different than the setpoint.

In 440, the total angular rate of the CVG is calculated as the sum of the pseudo-FTR angular rate that is determined from the force applied to the resonator, and the pseudo-WA angular rate that is determined from the angular direction of the vibration at the sampling time as determined in 430.

In one example, the pseudo-FTR angular rate is the ratio of the force applied to the resonator and a force to rebalance mode scale factor.

The pseudo-WA angular rate is calculated from the angular direction of the vibration at the sampling time.

In one example, the pseudo-WA angular rate is determined from the angular direction of the vibration determined for the current sampling interval and the angular direction of the vibration determined in at least one previous sampling interval. In a further example, the pseudo-WA angular rate is determined from the difference between the angular direction of the vibration determined for the current sampling interval and the angular direction of the vibration determined in at least one previous sampling interval

In 450, the setpoint for the next sampling interval is updated to the angular direction of vibration determined in a previous iteration (i.e. a previous sampling interval). The updated setpoint serves as the setpoint for 420 in the next iteration, that is it is the angular direction which is maintained in 420 of the next iteration.

According to some embodiments, in 450 the setpoint for the next iteration is updated to the angular direction found in 430 of the current iteration. According to some alternate embodiments, in 450 the setpoint for the next iteration is updated to the angular direction found in any preceding sampling interval other than the current iteration. For example, the setpoint may be updated to the angular direction found two iterations back, to the angular direction found three iterations back or even to earlier iterations.

In some aspects of the disclosure, in 450 the setpoint for the next sampling interval is calculated from the angular direction of vibration determined in multiple previous sampling intervals.

Optionally, the method includes 410 in which a vibration is induced in the resonator of the axisymmetric Coriolis vibrating gyroscope.

In an exemplary aspect of the disclosure, presented in more detail below, the pseudo-FTR angular rate is calculated as:

$$\frac{f^{FTR}(t_i)}{SF_{FTR}}$$

and the pseudo-WA angular rate is calculated as:

$$-\frac{\theta_{t_i} - \theta_{t_{i-1}}}{\eta \Delta t}$$

where:

$f^{FTR}(t_i)$ is the force applied to the resonator by the at least two control elements,
$SF_{FTR}$ is a force to rebalance mode scale factor,
$\theta_{ti}$ is an angular direction of the vibration of the resonator at sampling time i,
$\theta_{ti-1}$ is an angular direction of the vibration of the resonator at sampling time *i-1,*
$\eta$ is a whole angle mode scale factor, and
$\Delta t$ is the sampling period.

Optionally the method further includes adjusting the amplitude of the forces applied to the resonator to maintain a constant vibration amplitude of the resonator.
Optionally the method further includes synchronizing the frequency of the resonator's vibration with a reference signal.
Optionally the method further includes reducing quadrature errors using a quadrature control loop.
Optionally the method further includes calibration and/or self-calibration of the scale factor and/or bias.

VI. Mathematical models

Mathematical models of a non-ideal CVG and of an exemplary embodiment of FAT-mode operation are now presented.
In the FAT mode there are two different dynamical situations for the vibrating wave. The first is when there is enough force to keep the vibrating wave in a given position. Second, when the pseudo-FTR mode cannot keep the vibrating wave in a fixed position and the pseudo-WA mode enters in action. In this situation, the vibrating wave precesses with an angular rate equal to $\Omega_i - \Omega_{FTR}^{max}$ as shown below.
Note that in the equations the label FTR refers to pseudo-FTR calculations and the label WA refers to pseudo-WA.
Some non-limiting aspects of the FAT operating mode may be found in Y. Arazi and J. L. Gruver, "A new operational mode for axisymmetric Coriolis vibrating gyroscopes: Force Angle Tracking (FAT),"2023 DGON Inertial Sensors and Systems (ISS), Braunschweig, Germany, 2023, pp. 1-13, which is incorporated herein in its entirety by reference into the specification.

VI.1 Mathematical model of a non-ideal CVG

Lynch's system of differential equations describe the dynamics of two oscillation modes with non-homogenous damping and frequency split, coupled by a Coriolis force, and successfully describes the dynamics of non-ideal CVGs. Lynch's system of differential equations including external forces $f_x(t)$ and $f_y(t)$ are:

$$\frac{d^2x(t)}{dt^2} + \Delta\left(\frac{1}{\tau_+}\right)\frac{dx(t)}{dt} + \Omega_-\frac{dy(t)}{dt} + \omega^2 x(t) - \Delta\omega_c x(t) - \Delta\omega_s y(t) = f_x(t),$$

$$\frac{d^2y(t)}{dt^2} + \Delta\left(\frac{1}{\tau_-}\right)\frac{dy(t)}{dt} + \Omega_+\frac{dx(t)}{dt} + \omega^2 y(t) + \Delta\omega_c y(t) - \Delta\omega_s x(t) = f_y(t), \quad (1)$$

where $\omega^2 = \frac{\omega_x^2 + \omega_y^2}{2}$, $\omega_{x/y}$ are the resonant frequencies of the *x/y* mode, respectively, and:

$$\Delta\left(\frac{1}{\tau_+}\right) \equiv \frac{2}{\tau} + \Delta\left(\frac{1}{\tau}\right)\cos 2n\theta_\tau, \qquad \Omega_+ \equiv \Delta\left(\frac{1}{\tau}\right)\sin 2n\theta_\tau + 2n\eta\Omega_i,$$

$$\Delta\left(\frac{1}{\tau_-}\right) \equiv \frac{2}{\tau} - \Delta\left(\frac{1}{\tau}\right)\cos 2n\theta_\tau, \qquad \Omega_- \equiv \Delta\left(\frac{1}{\tau}\right)\sin 2n\theta_\tau - 2n\eta\Omega_i,$$

$$\Delta\omega_c \equiv \omega\Delta\omega\cos 2n\theta_\omega, \qquad \Delta\omega_s \equiv \omega\Delta\omega\sin 2n\theta_\omega, \qquad (2)$$

$\omega\Delta\omega = \frac{\omega_x^2 - \omega_y^2}{2}, \frac{1}{\tau} = \frac{1}{2}\left(\frac{1}{\tau_x} + \frac{1}{\tau_y}\right), \Delta\left(\frac{1}{\tau}\right) = \frac{1}{\tau_x} - \frac{1}{\tau_y}$, $\tau_x$ and $\tau_y$ are the damping time constants of the $x$ and $y$ mode, respectively, $n$ is the vibration mode, $\eta$ is the geometric scale factor $(0 < \eta \leq 1)$, $\Omega_i$ is the external or input angular rate, and finally $\theta_\tau$ and $\theta_\omega$ are the orientation of the principal axes of damping and stiffness, repectively.

Equation (1) is also known as the fast variables model of the CVGs. A slow variables version is obtained by proposing a solution of Eq. (1) of the form:

$$x(t) = a(t)\cos[n\theta(t)+\theta_0]\cos[\omega t + \phi(t)] - q(t)\sin[n\theta(t)+\theta_0]\sin[\omega t + \phi(t)],$$

$$y(t) = a(t)\sin[n\theta(t)+\theta_0]\cos[\omega t + \phi(t)] + q(t)\cos[n\theta(t)+\theta_0]\sin[\omega t + \phi(t)]. \quad (3)$$

Where $a(t)$, $g(f)$, $\theta(t)$ and $\phi(t)$ are the slow or orbital variables and $\theta_0$ is an initial arbitrary angle position. The following set of variables is defined:

$$E(t) \equiv a^2(t) + q^2(t),$$

$$Q(t) \equiv 2a(t)q(t),$$

$$R(t) \equiv [a^2(t) - q^2(t)]\cos 2[n\theta(t)+\theta_0],$$

$$S(t) \equiv [a^2(t) - q^2(t)]\sin 2[n\theta(t)+\theta_0]. \quad (4)$$

where $E(t)$ is the energy, $Q(t)$ is the quadrature, $R(t)$ and $S(t)$ are functions of the azimuth angle $\theta(t)$ from which the position of the vibrating pattern may be estimated.

Finally:

$$\frac{dE(t)}{dt} = -E(t)\frac{2}{\tau} - \sqrt{E^2(t) - Q^2(t)}\,\Delta\left(\frac{1}{\tau}\right)\cos 2n[\theta(t) - \theta_\tau] - \frac{\sqrt{E(t)}f^E(t)}{\omega},$$

$$\frac{dQ(t)}{dt} = -Q(t)\frac{2}{\tau} - \sqrt{E^2(t) - Q^2(t)}\,\Delta\omega\sin 2n[\theta(t) - \theta_\omega] + \frac{\sqrt{E(t)}f^Q(t)}{\omega},$$

$$\frac{d\theta(t)}{dt} = -\eta\Omega_i + E(t)\frac{\Delta\left(\frac{1}{\tau}\right)\sin 2n[\theta(t) - \theta_\tau]}{2n\sqrt{E^2(t) - Q^2(t)}} + Q(t)\frac{\Delta\omega\cos 2n[\theta(t) - \theta_\omega]}{2n\sqrt{E^2(t) - Q^2(t)}}$$

$$+ \frac{\sqrt{E(t)}f^{FTR}(t)}{2n\omega\sqrt{E^2(t) - Q^2(t)}}. \quad (5)$$

where the forces $f^E(t)$, $f^Q(t)$, and $f^{FTR}(t)$ are determined from the control loops.

VI.2 Force Angle Tracking (FAT) model

The output signal of a CVG may be written as follows:

$$x(t) = A_x(t)\cos[\omega t + \phi(t)] + B_x(t)\sin[\omega t + \phi(t)],$$

$$y(t) = A_y(t)\cos[\omega t + \phi(t)] + B_y(t)\sin[\omega t + \phi(t)]. \quad (6)$$

where $A_{x/y}(t)$ and $B_{x/y}(t)$ are the in-phase and quadrature amplitudes of the $x(t)/y(t)$ output, respectively. Note that the in-phase and quadrature amplitudes may be obtained, for instance, by using synchronous demodulation.

As described above, the FAT mode is a single operational mode based on pseudo-WA and pseudo-FTR angular direction calculations. The pseudo-WA mode provides unlimited dynamic range and the pseudo-FTR mode is responsible for overcoming the lock-in or dead zone.

In order to achieve this goal, the pseudo-FTR control loop operates using the angle calculated in a previous sampling time (this means the pseudo-FTR does not close the control loop to a fixed setpoint angle, but instead to a "variable" angle value) and therefore does not force the vibrating wave to remain in a fixed position.

The output angular rate is calculated as the sum of the rate obtained from the pseudo-WA mode and the pseudo-FTR mode. The pseudo-FTR mode is closed to an angle setpoint whose value is not constant and may change with the external rate.

In practice, signals are sampled at discrete times. Therefore the mechanization is described for discrete times $t_i$. The sensor is initialized at $t_0$ in such a way that the vibrating wave is positioned at the angle $\theta_0 = \theta(t_0)$ using a force to rebalance forcing control loop. The forcing control loop will keep the wave in its position until a sufficiently large change in the external angular rate occurs. Until that point the angular rate is given by:

$$\Omega_{FAT}(t_0) = \Omega_{FTR}(t_0) = \frac{f^{FTR}(t_0)}{SF_{FTR}}. \tag{7}$$

where $f^{FTR}(t_0)$ is the pseudo-FTR force needed to keep the wave at $\theta_0$ and $SF_{FTR}$ is the scale factor of the pseudo-FTR mode. Let us assume that for time $t_i$ the input angular rate $\Omega_i$ changes.

Then the sampled signals $x(t_i)$ and $y(t_i)$ take the form:

$$\begin{aligned} x(t_i) &= A_x(t_i)\cos\left[\omega t_i + \phi(t_i)\right] + B_x(t_i)\sin\left[\omega t_i + \phi(t_i)\right], \\ y(t_i) &= A_y(t_i)\cos\left[\omega t_i + \phi(t_i)\right] + B_y(t_i)\sin\left[\omega t_i + \phi(t_i)\right]. \end{aligned} \tag{8}$$

Using the in-phase and quadrature amplitudes, Lynch's variables $E(t_i)$, $Q(t_i)$, $S(t_i)$ and $R(t_i)$ may be calculated as:

$$\begin{aligned} E(t_i) &= A_x^2(t_i) + B_x^2(t_i) + A_y^2(t_i) + B_y^2(t_i), \\ Q(t_i) &= 2\left[A_x(t_i)B_y(t_i) + A_y(t_i)B_x(t_i)\right], \\ S(t_i) &= 2\left[A_x(t_i)A_y(t_i) + B_x(t_i)B_y(t_i)\right], \\ R(t_i) &= A_x^2(t_i) + B_x^2(t_i) - A_y^2(t_i) - B_y^2(t_i). \end{aligned} \tag{9}$$

With the help of Eq. (9) the position of the vibrating wave at time $t_i$ is calculated as:

$$\theta(t_i) = \frac{1}{2n}\arctan\frac{S(t_i)}{R(t_i)}. \tag{10}$$

The pseudo-WA and pseudo-FTR angular rates are calculated as:

$$\begin{aligned} \Omega_{WA}(t_i) &= -\frac{\theta_{t_i} - \theta_{t_{i-1}}}{\eta \Delta t}, \\ \Omega_{FTR}(t_i) &= \frac{f^{FTR}(t_i)}{SF_{FTR}}. \end{aligned} \tag{11}$$

where $\Delta t$ is the sampling period.

Finally, the FAT angular rate is given by the sum of the pseudo-WA and pseudo-FTR angular velocities:

$$\Omega_{FAT}(t_i) = \Omega_{WA}(t_i) + \Omega_{FTR}(t_i). \tag{12}$$

The forces that control the amplitude, quadrature and rebalance modes are built as follows:

$$\begin{bmatrix} f_x(t_i) \\ f_y(t_i) \end{bmatrix} = f^Q(t_i) \begin{pmatrix} 0 & -1 \\ 1 & 0 \end{pmatrix} \begin{bmatrix} \cos n\theta(t_i) \\ \sin n\theta(t_i) \end{bmatrix} \cos \left[ \omega t_i + \phi(t_i) \right] + \begin{bmatrix} f^E(t_i) \begin{pmatrix} 1 & 0 \\ 0 & 1 \end{pmatrix} \end{bmatrix}$$
$$+ f^{FTR}(t_i) \begin{pmatrix} 0 & -1 \\ 1 & 0 \end{pmatrix} \end{bmatrix} \begin{bmatrix} \cos n\theta(t_i) \\ \sin n\theta(t_i) \end{bmatrix} \sin \left[ \omega t_i + \phi(t_i) \right]. \qquad (13)$$

where $\Omega_{FTR}(t_i)$ is estimated from the control loops with setpoint values $\theta_{ti-1}$, for the exemplary embodiment in which the setpoint value is updated based on the angular direction at $t_{i-1}$.

A saturation angular rate $\Omega^{max}_{FTR}$ is defined as the maximum rate that the forcing control loop is able to compensate for.

It is worth highlighting that by using a setpoint equal to the value of the process variable in a previous time step, the error of the pseudo-FTR control loop is kept to a minimum.

The FAT mode has two possible steady state dynamics:

1) $|\Omega_i| \leq \Omega^{max}_{FTR}$, in this case we have $\Omega_{FTR} = \Omega_i$ and $\Omega_{WA} = 0$.

2) $|\Omega_i| > \Omega^{max}_{FTR}$, in this case, $\Omega_{FTR} = \Omega^{max}_{FTR}$, and the vibrating wave will rotate with an angular velocity equal to $\Omega_i - \Omega^{max}_{FTR}$.

For the case where the updated setpoint value equals the setpoint value of the immediately preceding sampling interval, the flow of the FAT mechanization may be summarized as:

$$\underbrace{\begin{array}{l} x(t_i) = A_x(t_i) \cos \left[ \omega t_i + \phi(t_i) \right] + B_x(t_i) \sin \left[ \omega t_i + \phi(t_i) \right] \\ y(t_i) = A_y(t_i) \cos \left[ \omega t_i + \phi(t_i) \right] + B_y(t_i) \sin \left[ \omega t_i + \phi(t_i) \right] \end{array}}_{\text{Gyroscope's sensed signals}} \rightarrow \underbrace{\begin{array}{l} E(t_i) = A_x^2(t_i) + B_x^2(t_i) + A_y^2(t_i) + B_y^2(t_i) \\ Q(t_i) = 2 \left[ A_x(t_i) B_y(t_i) + A_y(t_i) B_x(t_i) \right] \\ R(t_i) = 2 \left[ A_x(t_i) A_y(t_i) + B_x(t_i) B_y(t_i) \right] \\ S(t_i) = A_x^2(t_i) + B_x^2(t_i) - A_y^2(t_i) - B_y^2(t_i) \end{array}}_{\text{Lynch's parameters}}$$

$$\rightarrow \underbrace{\theta(t_i) = \frac{1}{2n} \arctan \frac{S(t_i)}{R(t_i)}}_{\text{Angle}} \rightarrow \underbrace{\begin{array}{l} \Omega_{WA}(t_i) = -\frac{\theta(t_i) - \theta(t_{i-1})}{\eta \Delta t} \\ \Omega_{FTR}(t_i) = \frac{f^{FTR}(t_i)}{SF_{FTR}} \\ f^{FTR} \text{ setpoint value: } \theta(t_i) = \theta(t_{i-1}) \end{array}}_{\text{FTR and WA angular rates estimation}} \rightarrow \underbrace{\Omega_{FAT}(t_i) = \Omega_{WA}(t_i) + \Omega_{FTR}(t_i)}_{\text{FAT output angular rate}}$$

As may be seen, the $f^{FTR}$ setpoint value is updated to $\theta_{ti} = \theta_{ti-1}$.

VII. Feedback Loops

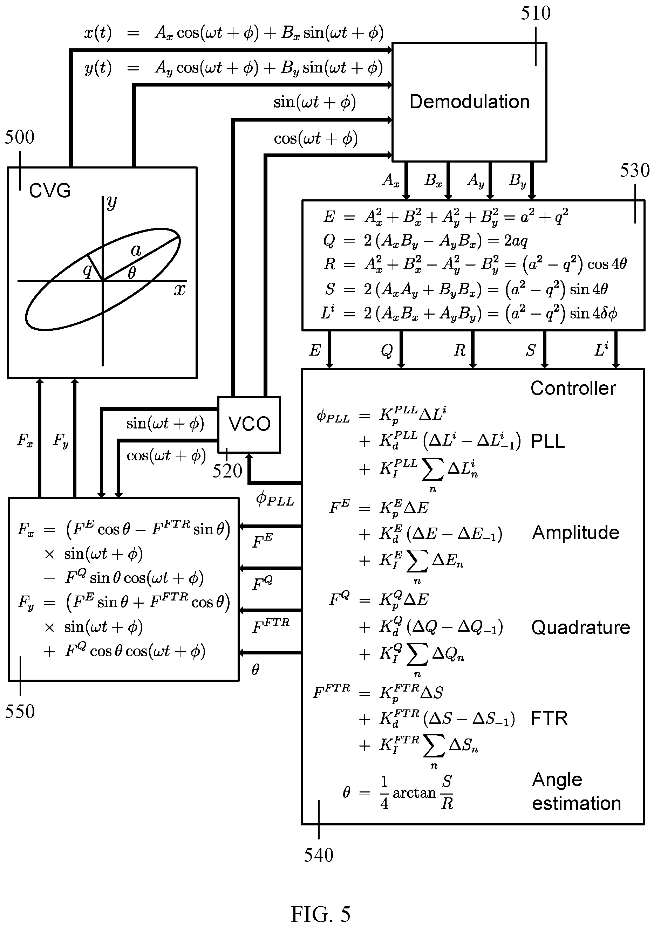

Reference is now made to Fig. 5, which is a simplified diagram illustrating the calculation flow and feedback loops for a CVG, according to an exemplary aspect of the disclosure.

The CVG 500 pickoff control elements' output signals $x(t)$ and $y(t)$ to demodulator 510. Demodulator 510 also inputs in phase and quadrature oscillation reference signals from VCO 520. Based on these inputs, demodulator 510 outputs the values of $A_x$, $B_x$, $A_y$ and $B_y$. In 520, the values of $E, Q, R,$ S and $L^i$ are calculated from $A_x$, $B_x$, $A_y$ and $B_y$. Controller 540 implements four feedback loops: pseudo-FTR, PLL, amplitude and quadrature. In 550, the physical forces $(Fx, Fy)$ that are applied by the forcing control elements in HRG 500 are generated based on values provided by controller 540.

VIII. Experimental Results

The experimental results shown herein illustrate how the FAT mode reacts to step changes of the external angular velocity. For the sake of clarity and without loss of generality, the chosen saturation rate value is

$$\Omega_{FTR}^{Max} = 2 \text{ deg/sec}$$ . The change in angular rate was applied at $t$ = 5 seconds. A macro HRG was used for the experiments.

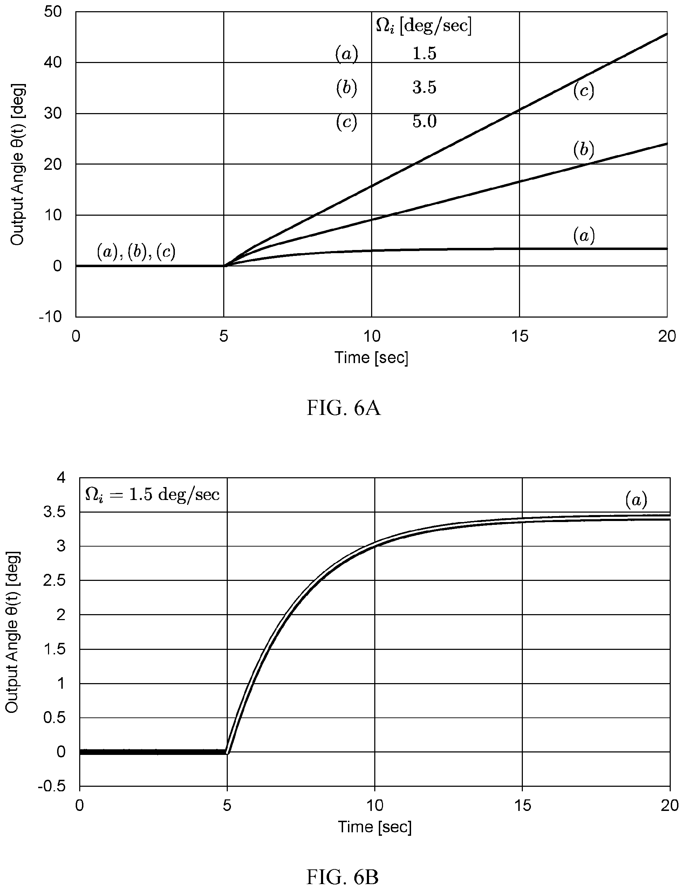

Fig. 6A depicts the dynamics of the output angular position of the vibrating wave for changes of the input angular rate from 0 to 1.5 (case a), 3.5 (case b) and 5.0 deg/sec (case c), respectively. For case (a) the step size is smaller than the saturation angular rate and therefore, after a transient time, the azimuth angle $\theta(t)$ locks at a given position.

For cases (b) and (c) the step value is greater than $\Omega_{FTR}^{Max}$ therefore, after a transient time, the angle increases linearly with a rate given by $\Omega_i - \Omega_{FTR}^{max}$ . For all cases, the angle dynamics behaves in a non-linear fashion until the pseudo-FTR mode achieves its saturation value.

Fig. 6B is a close up of case (a). The white line (in between the two black lines) exponentially fits the data with a time constant $\tau$ = 2.315 seconds.

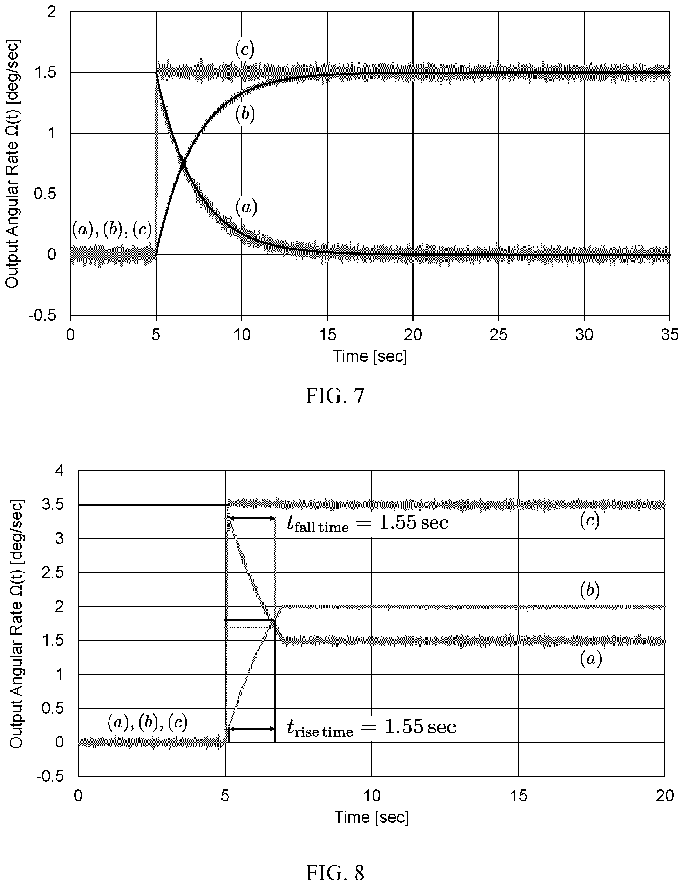

Fig. 7 shows the time evolution of the FAT output angular rate $\Omega(t)$ (c) to a change of an angular rate smaller than $\Omega_{FTR}^{Max}$ . It is seen in Fig. 7 that the pseudo-WA mode (a) reacts first to the input angular rate and then the pseudo-FTR mode (b) starts to compensate for the change. The FAT output angular rate $\Omega(t)$ (c) is the sum of the angular rate of pseudo-WA mode (a) and the angular rate pseudo-FTR mode (b). It is seen that FAT mode (c) responds quickly to the change in input angular rate $\Omega_i$ due to the rapid change in the pseudo-WA value and remains at that level as the pseudo-WA value drops and the pseudo-FTR value rises.

After a transient time, $\Omega_{WA}$ = 0 and the output angular rate is given, solely, by the pseudo-FTR mode (b). Both modes reach a steady state exponentially with the same time constant $\tau$ = 2.315 seconds. Note that the same value of $\tau$ was obtained in the exponential fit of Fig. 6 (a).

Fig. 8 shows the dynamics of the FAT output angular $\Omega(t)$ (c) to a change of $\Omega_i$ from 0 to 3.5 deg/sec. After a transient time, the pseudo-FTR mode achieves the saturation value of 2 deg/sec and the wave continues to precess with a rate equal to 1.5 deg/sec = $\Omega_i - \Omega_{FTR}^{max}$ . The rise and fall times of the pseudo-FTR (b) and pseudo-WA (a) data are equal to 1.55 seconds. As seen before, the pseudo-WA mode responds first to the change of the input angular rate.

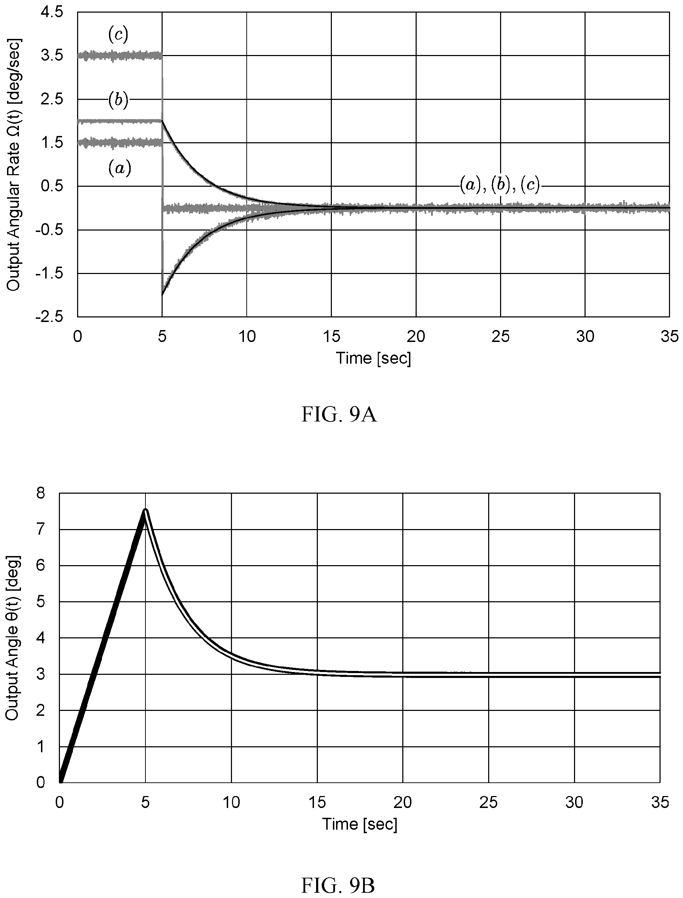

Fig. 9A shows the dynamics of the pseudo-WA (a), pseudo-FTR (b) and FAT (c) modes to a change of the input angular rate from 3.5 to 0 deg/sec. As seen before, the pseudo-WA mode (a) reacts first and then the pseudo-FTR (b) starts to compensate for the change. The black lines exponentially fit the pseudo-WA and pseudo-FTR data with a time constant equal to $\tau$ = 2.315 seconds.

Fig. 9B shows the time evolution of the output angle. The white line (in between the two black lines) exponentially fits the data with a time constant $\tau$ = 2.315 seconds. At time t = 5 seconds, the change in the input angular rate induces the vibrating wave to change its direction of rotation to keep the sum of the pseudo-FTR and pseudo-WA rates equal to zero. The same change is seen in the direction of rotation of the output angular velocity.

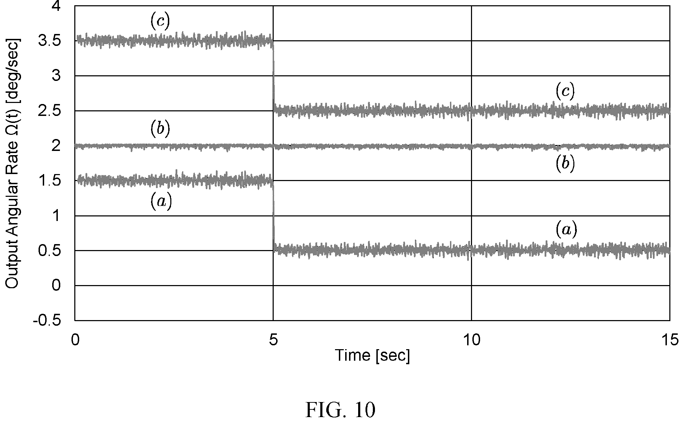

Fig. 10 shows the dynamical response of the pseudo-WA (a), pseudo-FTR (b) and FAT (c) modes to a step change of the input angular rate $\Omega_i$ from 3.5 to 2.5 deg/sec. In this case, the final angular velocity is greater than the saturation angular rate $\Omega_{FTR}^{Max}$ and therefore there is no need for the pseudo-FTR to respond to the input change. However the pseudo-WA angular rate changes its value from 1.5 deg/sec to 0.5 deg/sec in order to compensate for the input angular change and to keep the pseudo-FAT rate equal to the final value of 2.5 deg/sec.

**General**

It is expected that during the life of a patent maturing from this application many relevant Coriolis vibrating gyroscopes, control elements, control circuitry (analog and/or digital) and feedback loops for controlling CVG operation will be developed and the scope of the terms Coriolis vibrating gyroscope, control element, control circuitry and feedback loop are intended to include all such new technologies a priori.

The terms "comprises", "comprising", "includes", "including", "having" and their conjugates mean "including but not limited to".

The term "consisting of" means "including and limited to".

As used herein, singular forms, for example, "a", "an" and "the" include plural references unless the context clearly dictates otherwise.

Within this application, various quantifications and/or expressions may include use of ranges. Range format should not be construed as an inflexible limitation on the scope of the present disclosure. Accordingly, descriptions including ranges should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within the stated range and/or subrange, for example, 1, 2, 3, 4, 5, and 6. Whenever a numerical range is indicated within this document, it is meant to include any cited numeral (fractional or integral) within the indicated range.

It is appreciated that certain features which are (e.g., for clarity) described in the context of separate embodiments, may also be provided in combination in a single embodiment. Where various features of the present disclosure, which are (e.g., for brevity) described in a context of a single embodiment, may also be provided separately or in any suitable sub-combination or may be suitable for use with any other described embodiment. Features described in the context of various embodiments are not to be considered essential features of those embodiments, unless the embodiment is inoperative without those elements.

Although the present disclosure has been described in conjunction with specific embodiments thereof, it is evident that many alternatives, modifications, and variations will be apparent to those skilled in the art. Accordingly, this application intends to embrace all such alternatives, modifications and variations that fall within the spirit and broad scope of the appended claims.

All references (e.g., publications, patents, patent applications) mentioned in this specification are herein incorporated in their entirety by reference into the specification, e.g., as if each individual publication, patent, or patent application was individually indicated to be incorporated herein by reference. Citation or identification of any reference in this application should not be construed as an admission that such reference is available as prior art to the present disclosure. In addition, any priority document(s) and/or document(s) related to this application (e.g., co-filed) are hereby incorporated herein by reference in its/their entirety.

Where section headings are used in this document, they should not be interpreted as necessarily limiting.

**Claims**

1. An axisymmetric Coriolis vibrating gyroscope, comprising:

   a resonator configured to vibrate in a standing wave;
   a plurality of control elements, configured to perform at least one of maintaining vibration in said resonator by applying respective forces to said resonator and sensing vibrations of said resonator around an axis of symmetry of said resonator; and
   a control circuitry associated with said plurality of control elements, configured to iteratively:

   control said control elements so as to maintain an angular direction of said vibration at a current setpoint;
   at a sampling time of a current iteration, determine an angular direction of said vibration of said resonator from respective readings of at least two of said control elements;
   calculate a total angular rate as a sum of a first angular rate determined from a force applied to said resonator by at least two of said control elements and a second angular rate determined from said angular direction of said vibration at said sampling time of said current iteration; and
   update said setpoint to an angular direction of said vibration determined in a previous iteration.

2. The axisymmetric Coriolis vibrating gyroscope of claim 1, wherein said force is calculated based on the updated setpoint established in the immediately preceding iteration.

3. The axisymmetric Coriolis vibrating gyroscope of claim 1 or claim 2, wherein said previous iteration comprises the immediately preceding iteration.

4. The axisymmetric Coriolis vibrating gyroscope of claim 1 or claim 2, wherein said previous iteration is any iteration other than the immediately preceding iteration.

5. The axisymmetric Coriolis vibrating gyroscope of any one of claims 1-4, wherein said first angular rate comprises a ratio of said force applied to said resonator and a force to rebalance mode scale factor.

6. The axisymmetric Coriolis vibrating gyroscope of any one of claims 1-5, wherein said second angular rate is determined from said angular direction of said vibration at said sampling time of said current iteration and an angular direction of said vibration determined in at least one previous iteration.

7. The axisymmetric Coriolis vibrating gyroscope of any one of claims 1-5, wherein said second angular rate is determined from a difference between said angular direction of said vibration at said sampling time of said current iteration and an angular direction of said vibration determined in at least one previous iteration.

8. A method for operating an axisymmetric Coriolis vibrating gyroscope, said method comprising iteratively:

controlling a force applied to a resonator so as to maintain an angular direction of a vibration of said resonator at a current setpoint;
at a sampling time, determining an angular direction of said vibration of said resonator;
calculating a total angular rate as a sum of a first angular rate determined from said force applied to said resonator and a second angular rate determined from said angular direction of said vibration at said sampling time of said current iteration; and
updating said setpoint to an angular direction of said vibration determined in a previous iteration.

9. The method of claim 8, wherein said force is calculated based on the updated setpoint established in the immediately preceding iteration.

10. The method of claim 8 or claim 9, wherein said first angular rate comprises a ratio of said force applied to said resonator and a force to rebalance mode scale factor.

11. The method of any one of claims 8-10, wherein said second angular rate is determined from said angular direction of said vibration at said sampling time of said current iteration and an angular direction of said vibration determined in at least one previous iteration.

12. The method of any one of claims 8-10, wherein said second angular rate is determined from a difference between said angular direction of said vibration at said sampling time of said current iteration and an angular direction of said vibration determined in at least one previous iteration.

13. The method of any one of claims 8-12, further comprising adjusting the amplitude of forces applied to said resonator so as to maintain a constant vibration amplitude of the resonator.

14. The method of any one of claims 8-13, wherein said setpoint is updated to an angular direction of said vibration determined in the immediately preceding iteration.

15. The method of any one of claims 8-13, wherein said setpoint is updated to an angular direction of said vibration determined in a previous iteration other than the immediately preceding iteration.

100

1

1.5

2

FIG. 1A

100

4.4    4.3    4.2

4.5    1    4.1

3

1

2

4.6    4.7    4.8

FIG. 1B

FIG. 2A

FIG. 2B

300

Resonator — 310

↕ Forcing/pickoff signals

Control elements

321.1   321.n

330

Control circuitry

FIG. 3

Induce vibration in resonator of CVG —410

Control force to resonator to maintain the vibration at the current setpoint —420

At sampling time, determine current angular direction of vibration —430

Calculate total angular rate —440

Update setpoint to the setpoint for the next iteration —450

FIG. 4

$$x(t) = A_x \cos(\omega t + \phi) + B_x \sin(\omega t + \phi)$$

$$y(t) = A_y \cos(\omega t + \phi) + B_y \sin(\omega t + \phi)$$

$$\sin(\omega t + \phi)$$

$$\cos(\omega t + \phi)$$

510

Demodulation

500

CVG

530

$$E = A_x^2 + B_x^2 + A_y^2 + B_y^2 = a^2 + q^2$$

$$Q = 2\left(A_x B_y - A_y B_x\right) = 2aq$$

$$R = A_x^2 + B_x^2 - A_y^2 - B_y^2 = \left(a^2 - q^2\right)\cos 4\theta$$

$$S = 2\left(A_x A_y + B_y B_x\right) = \left(a^2 - q^2\right)\sin 4\theta$$

$$L^i = 2\left(A_x B_x + A_y B_y\right) = \left(a^2 - q^2\right)\sin 4\delta\phi$$

$$\sin(\omega t + \phi)$$  VCO

$$\cos(\omega t + \phi)$$

520

Controller

$$\phi_{PLL} = K_p^{PLL}\Delta L^i$$
$$+ K_d^{PLL}\left(\Delta L^i - \Delta L_{-1}^i\right) \text{ PLL}$$
$$+ K_I^{PLL}\sum_n \Delta L_n^i$$

$$F^E = K_p^E \Delta E$$
$$+ K_d^E\left(\Delta E - \Delta E_{-1}\right) \text{ Amplitude}$$
$$+ K_I^E \sum_n \Delta E_n$$

$$F^Q = K_p^Q \Delta E$$
$$+ K_d^Q\left(\Delta Q - \Delta Q_{-1}\right) \text{ Quadrature}$$
$$+ K_I^Q \sum_n \Delta Q_n$$

$$F^{FTR} = K_p^{FTR}\Delta S$$
$$+ K_d^{FTR}\left(\Delta S - \Delta S_{-1}\right) \text{ FTR}$$
$$+ K_I^{FTR}\sum_n \Delta S_n$$

$$\theta = \frac{1}{4}\arctan\frac{S}{R} \quad \text{Angle estimation}$$

$$F_x = \left(F^E \cos\theta - F^{FTR}\sin\theta\right)$$
$$\times \sin(\omega t + \phi)$$
$$- F^Q \sin\theta\cos(\omega t + \phi)$$
$$F_y = \left(F^E \sin\theta + F^{FTR}\cos\theta\right)$$
$$\times \sin(\omega t + \phi)$$
$$+ F^Q \cos\theta\cos(\omega t + \phi)$$

$$F_x \quad F_y$$

$$\phi_{PLL}$$

$$F^E$$

$$F^Q$$

$$F^{FTR}$$

$$\theta$$

550

540

FIG. 5

FIG. 6A

FIG. 6B

FIG. 7

FIG. 8

FIG. 9A

FIG. 9B

FIG. 10

Europäisches Patentamt
European Patent Office
Office européen des brevets

# EUROPEAN SEARCH REPORT

**Application Number**

EP 24 20 3518

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ARAZI YAAKOV ET AL: "A new operational mode for axisymmetric Coriolis vibrating gyroscopes: Force Angle Tracking (FAT)", 2023 DGON INERTIAL SENSORS AND SYSTEMS (ISS), IEEE, 24 October 2023 (2023-10-24), pages 1-13, XP034503392, DOI: 10.1109/ISS58390.2023.10361911 [retrieved on 2023-12-22] * page 2 - page 7 * | 1-15 | INV. G01C19/5691 |
| A | DATABASE COMPENDEX [Online] ENGINEERING INFORMATION, INC., NEW YORK, NY, US; 17 March 2021 (2021-03-17), JIA Y ET AL: "Linearity analysis of a hemispherical resonator gyro (HRG) based on force-rebalance mode", XP002812920, Database accession no. E20211310155049 * abstract; figure 9 * & JIA Y ET AL: "Linearity analysis of a hemispherical resonator gyro (HRG) based on force-rebalance mode", JOURNAL OF PHYSICS: CONFERENCE SERIES - 2021 7TH INTERNATIONAL SYMPOSIUM ON SENSORS, MECHATRONICS AND AUTOMATION SYSTEM, ISSMAS 2021 20210317 IOP PUBLISHING LTD GBR, vol. 1846, no. 1, 29 January 2021 (2021-01-29), DOI: 10.1088/1742-6596/1846/1/012017 | 13 | |
| X | US 2024/102803 A1 (BEITIA JOSÉ LOUIS [FR] ET AL) 28 March 2024 (2024-03-28) * paragraphs [0117], [0124], [0125] * | 1,8 | TECHNICAL FIELDS SEARCHED (IPC) G01C |

The present search report has been drawn up for all claims

| Place of search | Date of completion of the search | Examiner |
|---|---|---|
| The Hague | 30 January 2025 | de la Rosa Rivera, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 3518

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2025

| Patent document cited in search report | Publication date | Patent family member(s) | | Publication date |
|---|---|---|---|---|
| US 2024102803 A1 | 28-03-2024 | EP | 4343281 A1 | 27-03-2024 |
| | | FR | 3140161 A1 | 29-03-2024 |
| | | US | 2024102803 A1 | 28-03-2024 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Y. ARAZI** ; **J. L. GRUVER**. A new operational mode for axisymmetric Coriolis vibrating gyroscopes: Force Angle Tracking (FAT). *2023 DGON Inertial Sensors and Systems (ISS), Braunschweig, Germany*, 2023, 1-13